# EUROPEAN PATENT SPECIFICATION

(11) **EP 2 627 900 B1**
(45) Date of publication and mention of the grant of the patent: **13.02.2019**
(21) Application number: 10807535.9
(22) Date of filing: 20.12.2010
(51) Int. Cl.: F03D 9/00, H02J 3/38, F03D 9/11, F03D 9/25, H02S 10/12, F03D 9/17, F03D 80/80, F03D 17/00

(54) **POWER GENERATION APPARATUS**
ENERGIEERZEUGUNGSVORRICHTUNG
APPAREIL DE GÉNÉRATION D'ÉNERGIE ÉLECTRIQUE

(30) Priority: 24.12.2009 GB 0922536
(43) Date of publication of application: 21.08.2013
(73) Proprietor: Own Energy IP Ltd, Paisley, Strathclyde PA1 3QS (GB)
(72) Inventor: Gordon, David, Newton Mearns, Glasgow G77 5PF (GB)
(74) Representative: Hutchinson, Thomas Owen
(86) International application number: PCT/GB2010/052164
(87) International publication number: WO 2011/077134

(56) References cited:
- EP-A2- 2 101 392
- WO-A1-96/18937
- WO-A1-2008/104017
- WO-A2-2005/052362
- CN-Y- 201 053 603
- GB-A- 2 344 382
- GB-A- 2 446 530
- GB-A- 2 449 102
- KR-A- 20030 010 020
- US-A1- 2007 035 975

## Description

This invention relates to a power generation apparatus, in particular, but without limitation to renewable energy resources and/or wind turbine electricity generators.

Renewable energy sources, such as wind turbines, photovoltaic/solar panels, water turbines and ground/air source heat pumps are becoming more and more widely used as our energy demands increase, whilst at the same time, we try to reduce our reliance on fossil fuel energy sources. Renewable energy sources, if correctly designed and implemented, can provide a useful primary or secondary source of energy for powering homes, utilities and public services. However, renewable energy sources suffer the major disadvantage of providing erratic energy - that is energy that varies in quality and quantity depending on the prevailing conditions. For example, a wind turbine may produce varying amounts of power depending on the local wind speed. Similarly, photovoltaic cells may only provide reliable electricity during sunny daytime conditions, and the power output may depend on the weather, season etc.

The erratic nature of renewable energy poses technical difficulties because the demand for power rarely matches the available power. For example, electricity for lighting is less in demand on sunny days, than it is at night time when photovoltaic cells are largely ineffective. Moreover, in the case of wind turbine electricity, the power output varies on a second-by-second basis depending on the instantaneous wind speed. However, appliances requiring electricity often need relatively "clean" power to operate effectively, i.e. electricity having a substantially constant voltage, current and in the case of AC, frequency.

It is therefore often necessary to shunt the power from renewable energy sources through an inverter, which smooths and regulates the power output. This is often accomplished using batteries and other circuitry that enables excess power to be stored/accumulated and then released during times of lower power production. Such inverters are commonly used to supplement mains electricity.

Examples of known feed-in power generation systems are disclosed in the following published patent applications: GB 2 344 382 A [SANSONE et al; 7 June 2000]; WO 96/18937 A1 [KENETECH WINDPOWER INC; 20 June 1996]; and GB 2 446 530 A [UNIV MONTFORD; 13 August 2008]. In addition, international patent application number PCT/GB2004/004859 (published as WO 2005/052362) is directed to a roof-mounted wind turbine for domestic use and comprises an inverter that connects to the ring main of a domestic dwelling. This technology enables electrical appliances to be powered from the ring main using electricity generated by the turbine. However, the ring main power can be topped-up using the mains electricity during periods when the power output from the turbine is insufficient to meet the instantaneous power demand of the dwelling.

The inverter disclosed in this patent is connected to the ring main side of the electricity meter, which means that when the electricity generated by the turbine exceeds the instantaneous power demand, the turbine output is reduced to match it. This means that useful electricity that might have been generated is not used, which represents a loss of opportunity.

This invention aims to provide an improved renewable energy source of electricity.

Various aspects of the invention are set forth in the appended claims.

The invention therefore provides an apparatus that can feed excess electricity back into the mains power supply, in particular, but not necessarily, when the power demand is lower than the power output of the renewable energy source of electricity. Furthermore, the power generation apparatus may enable a renewable energy source of electricity to provide power to a power-consuming circuit when the mains power supply is inoperative, e.g. during a power outage.

The electrical connection between the power generation circuit and the power consumption circuit may additionally comprise means for storing power, e.g. a battery, and/or secondary regulating means, e.g. a secondary inverter, for converting the stored power into mains-type electricity. The secondary inverter may be adapted to convert DC electric current to AC electric current at a desired RMS voltage and/or frequency.

The inverter may be any device/circuit capable of regulating, conditioning, shaping or otherwise modifying the output of the renewable energy source of electricity. An inverter may convert DC to AC and provide an AC output of a substantially constant RMS voltage and frequency.

The renewable energy source of electricity may be any one or more of the group comprising a wind electricity turbine, a photovoltaic cell, and a water electricity turbine. The renewable energy source of electricity is preferably a wind electricity turbine.

A supplementary or "feed-in" electricity meter and/or a supplementary generation meter is interposed between the inverter and the electrical connection. The supplementary electricity meter is arranged to meter the amount of electricity that is fed from the renewable energy source of electricity into the mains power supply. The use of a supplementary electricity meters enables a user to obtain a discount on the electricity consumed from the mains power supply, for example, where the mains electricity supplier offers a feed-in tariff that is higher than the standard electricity consumption tariff.

Additionally or alternatively, the apparatus of the invention may comprise an accumulator or battery for storing electricity generated by the renewable energy source of electricity during periods when the power output of the renewable energy source of electricity exceeds the instantaneous power demand of the ring main. A supplementary inverter may be associated with the accumulator or battery for converting stored DC voltage into AC voltage at a desired voltage, current and/or frequency.

Conveniently, the invention may be used in a domestic setting so that users can benefit from reduced reliance on mains electricity. In addition, domestic users may also benefit from preferential electricity rates from their electricity supplier to offset their capital investment in the apparatus. In addition, by generating electricity on-site, the energy losses associated with power transmission over long distances from conventional electricity generation stations can be reduced considerably.

In an alternative embodiment of the invention, the apparatus may be used for powering utilities, such as, but without limitation to, street lighting, traffic lights and signage etc. Renewable energy sources of electricity are already known for powering remote/isolated utilities or utilities that are not within easy reach of a mains power connection, such as motorway gantries, telephone exchanges etc. However, the apparatus of the invention is particularly suited to applications where a mains power supply is available, but where local authorities, or private property owners, e.g. retail park operators, wish to reduce their reliance on mains electricity and/or wish to benefit from preferential "feed-in" electricity tariffs.

The utility may comprise a street light, a roadside gantry, a telephone exchange, a cellular telephone or radio transmitter. The renewable energy source of electricity may be mounted on the street light, gantry or telecommunications mast.

Street lighting often comprises a tall lamp post, which means that the renewable energy source of electricity, e.g. a photovoltaic cell, a wind turbine etc., can be mounted at an elevated level to benefit from reduced shadows and increased wind speeds compared to ground-level conditions. Additionally, since street lights are already in-situ, there are fewer local authority planning issues surrounding adding a renewable energy source of electricity to an existing street light than there would be to install a new, stand-alone renewable energy source of electricity.

A further electrical connection may be provided for connecting the renewable energy source of electricity to the lamp of a street light in the event of a power outage.

Preferred embodiments of the invention shall now be described, by way of example only, with reference to the accompanying drawings in which:
Figure 1 is a schematic diagram of an apparatus in a domestic setting;
Figure 2 is a schematic diagram of a street light;
Figure 3 is a schematic diagram of a street light according to the invention;
Figure 4 is a schematic circuit diagram of an inverter for the invention;
Figure 5 is a typical power curve for a small-scale wind turbine (SSWT) of the type useable with the present invention; and
Figure 6 is a predicted power curve for a small-scale wind turbine (SSWT) of the type useable with the present invention.

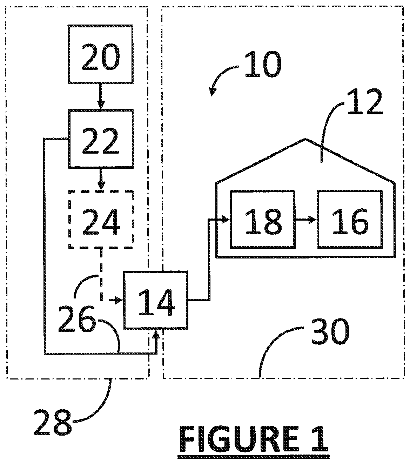

Figure 1 shows an apparatus 10 used for supplying electricity to a domestic residence 12. The residence 12 is supplied with mains electricity from a mains electricity supply 14, which feeds electricity to the residence's ring main 16 via an electricity meter 18. The meter 18 records the amount of electricity consumed for billing and monitoring purposes. In addition, the residence 12 is fitted with a renewable energy source electricity generator, such as a roof-mounted wind turbine or photovoltaic cell 20. The erratic electricity generated by the renewable energy source electricity generator 20 is smoothed and conditioned using an inverter 22, whose function shall be described in detail below. The output of the inverter 22 is optionally connected to a supplementary, "feed-in" meter 24, which meters and monitors the amount of electricity generated by the renewable energy source electricity generator 20. An electrical connection 26 is made between the inverter 22 or feed-in meter 24 and the mains electricity supply 14. Thus, in essence, the invention provides a system comprising two separate circuits: a first circuit 28 providing power to the mains electricity supply 14; and a second circuit 30 for consumption of electricity from the mains power supply 14. However, because the two circuits 28, 30 are linked together, the user can benefit from electricity offsetting, e.g. selling excess generated electricity to the grid and/or topping-up the locally-generated electricity using the grid when local power consumption exceeds local power generation.

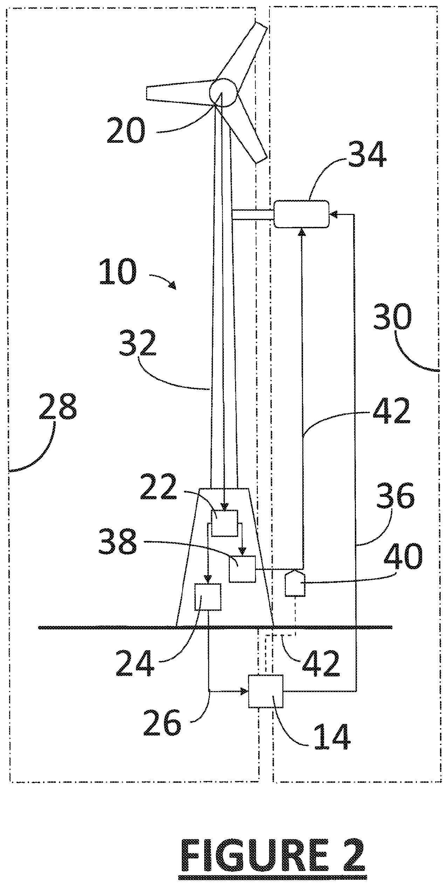

Figure 2 shows an apparatus particularly suited to street lighting. In this case, a street lamp post 32 is fitted with a wind turbine electricity generator 20 whose power output is fed into an inverter 22. In the same manner as previously described, the inverter's 22 output is connected to a mains power supply 14 via a feed-in meter 24 so that electricity generated by the turbine 20 can be metered and fed 26 directly into the electricity grid 14. The street lamp post 32 is also provided with a lamp 34 for illuminating the vicinity of the lamp post 32 in a conventional manner. The lamp 34 is powered 36 directly off the mains power supply 14. Thus, the alternative embodiment of the invention also comprises separate electricity generation 28 and electricity consumption 30 circuits. Again, because the two circuits are linked, the user can benefit from offsetting.

In addition, the lamp post 32 comprises a battery or other electricity accumulator 38 for storing electricity generated by the wind turbine 20. The battery 38 is charged using electricity from the inverter 22 and comprises a switched 40 connection 42 to the lamp 34. The purpose of the battery/accumulator 38 is not to smooth or otherwise invert the power from the generator 20, but to provide a backup source of electricity in the event that the mains power supply 14 is interrupted at the same time as the generator 20 is not generating electricity. Of course, if the mains power supply 14 is interrupted (e.g. a power outage) and the generator 20 is functioning, then there is an electrical connection 26, 36 from the inverter 22 to the lamp 34 to enable the lamp 34 to remain lit. Thus, switch 40 comprises an electrical connection 42 to the mains power supply that senses when there is no voltage at the mains power supply terminals, and in that event, switches on power from the battery 38 to the lamp 34.

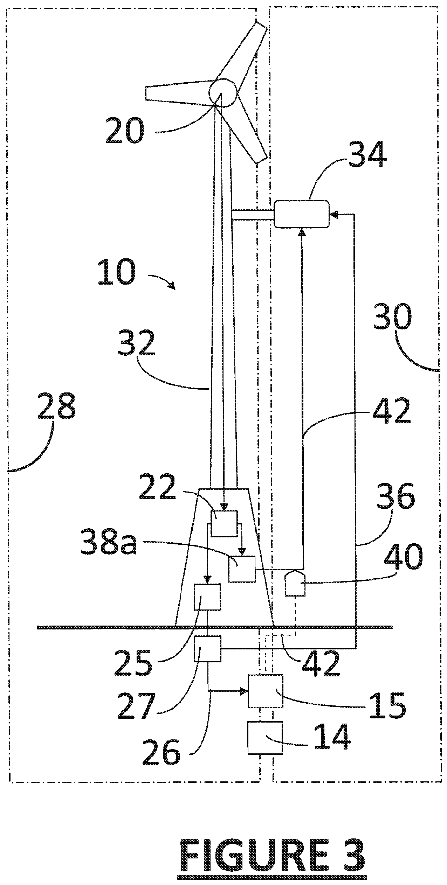

Figure 3 is similar to Figure 2 and shows a similar, but slightly different arrangement to that shown in Figure 2. Identical reference signs have been used to identify identical features.

In Figure 3, the street lamp post 32 is fitted with a wind turbine electricity generator 20 whose power output is fed into an inverter 22. The inverter's 22 output, i.e. the amount of electricity generated, is metered by a generation meter 25. The inverter 25 is also connected to a feed-in meter 27, which meters the amount of electricity fed back into the mains power supply 14. The power generation circuit 28 is therefore able to generate electricity from a renewable source of electricity, in this case wind power, and to feed the generated electricity back into the mains power supply 14 via a conventional, master electricity meter 15.

At the same time, the street lamp 34 is powered directly off the mains power supply 14 in the usual way, and the lamp's 34 power consumption metered using the master electricity meter 15.

The generation meter 25 therefore measures the amount of power produced by renewable energy system, the export meter 27 measures the net power exported, i.e. power consumed by light minus power generated (this subtraction process occurs naturally due to the nature of electricity and is not performed by the meter), and the master electricity meter 15 measures net power consumed. In other words, the generation and consumption circuits are linked at the export meter.

However, in the event of a power outage, i.e. no electricity being detected 40 at the mains power supply 14, the lamp 34 is powered by the battery/inverter 38a. The battery/inverter 38a comprises a battery for storing DC electricity and an inverter for converting the DC voltage into AC at a desired RMS voltage and frequency to power the lamp 34. In the event of resumption of mains power 14, this is detected by the switching circuit 40, thereby disconnecting the lamp 34 from the battery/inverter 38a such that the lamp 34 reverts to receiving electricity from the mains 14, via connection 42.

The inverter 22 & 38a must match the renewable energy generator and the mains power supply. In the present examples, the wind turbine outputs DC electric current, and the inverter 22 converts that electricity to 220V AC at 50Hz, although these requirements will vary from country to country.

Of course, the street lamp embodiments shown are merely examples: the load could be any electrical load, and not just a street lamp.

The whole apparatus preferably needs to comply with various safety and efficacy requirements/standards, such as:
BS EN ISO 14001:2004 Environmental Management Systems (requirements with guidance for use);
2008/34/EC Waste Electrical and Electronic (WEEE) Directive;
2008/35/EC RoHS Restriction on the use of certain Hazardous Substances Directive;
2004/108/EC Electromagnetic Compatibility (EMC) Directive;
2006/42/EC Low Voltage Directive;
2006/42/EC Machinery Directive;
FCC RFI;
G83/1 Electricity Association Engineering Recommendation Guidelines for SSEG's connecting in parallel to public low voltage distribution networks;
BS EN 50438:2007 Requirements for the connection of micro-generators in parallel with public low-voltage distribution networks;
UK1741 Product Safety Standard for Inverters, Converters and Controllers for Use in Independent Power Systems;
BS EN 60335-1:2002+A2:2006 Household and similar electrical appliances. Safety.
BS EN 61400 part 2 Small Scale Wind Turbine Systems - Safety;
IEEE STD C63.38-1994 ESD Requirements IEEE;
Underwriters Laboratories UL 1741 Standard for Safety for Inverters, Converters, Controllers and Interconnection System Equipment for Use With Distributed Energy Resources;
FCC Title 47 of the Code of Federal Regulations;
CAN/CSA CAN/CSA-C22.2 No. 257, Interconnecting inverter-based micro-distributed resources to distribution systems;
BS EN 50419:2006 Marking of electrical and electronic equipment in accordance with article 11(2) of Directive 2002/96/EC (WEEE);
BS EN 61293:1995, IEC 61293:1994 Marking of electrical equipment with ratings related to electrical supply; and
BS EN 954-1:1997 Safety of machinery. Safety related parts of control systems. General principles for design.

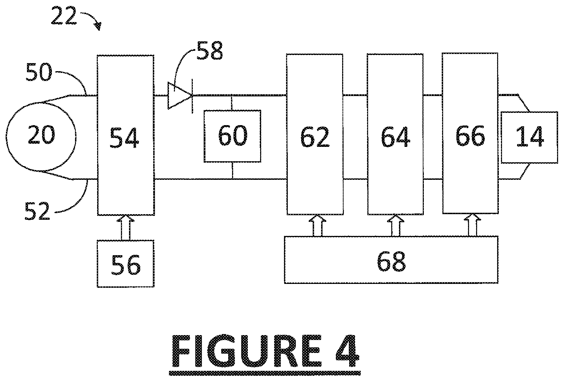

Figure 4 is a schematic circuit diagram of the inverter 22 of the invention, which is a DC to AC inverter. The inverter 22 comprises a set of input terminals 50, 52 to which the generator 20 is connected and through which the raw, DC electricity from the generator is received. The inverter 22 comprises a protection circuit 54, which conditions it from voltage and current spikes and which also serves as a first pass conditioner for the incoming electricity.

A speed controller 56 monitors the speed of the generator 20 by reference to its voltage output and/or current or monitoring of its electrical frequency and can apply a braking voltage or load to slow it down in the event of excessive speed.

The incoming DC voltage then passes through a diode 58 and is connected in parallel to a capacitor or charge storage device 60 to further smooth-out voltage fluctuations and to prevent current backflow towards the generator 20.

The DC voltage is then shaped using a current shaping and isolation circuit 62 and converted to AC using an inverse rectifier circuit 64. Finally, a shunt 66 is used to provide output protection from the mains 14 to which the inverter 22 is connected.

In addition, the inverter 22 comprises a power control loop 68 which monitors the voltage at each stage of the conversion and applies corrections to each of the isolation 62, inverse rectifier 64 and shunt 66 circuits to ensure that the outputted AC power matches that of the mains power supply 14 within acceptable limits (e.g. as set out in G83/1 Electricity Association Engineering Recommendation Guidelines for SSEG's connecting in parallel to public low voltage distribution networks).

The output of the DC to AC inverter 22 is physically connected to the AC mains of a single phase low voltage utility network 14. The unit 22 is designed to match the mains voltage and frequency and to operate in a 'current share' mode with the AC mains for the following:
For UK 'mains' systems the 'AC' 'mains' limits are outlined in Appendix A, G83/1 'Requirements for the connection of micro-generators in parallel with public low-voltage distribution networks'
For other EU countries, the relevant sections of BS EN 50438: 2007 'Requirements for the connection of micro-generators in parallel with public low-voltage distribution networks' are applicable
For other countries, the relevant 'mains' utility connection standards are applicable, however these standards are not listed herein.

In one specific embodiment, which is described herein for illustrative purposes, the output power is continuously conditioned, converted and surge-protected. The inverter 22 has an output power of 1200 watts continuous and is able to sustain an output power of 1800 watts for 30 seconds out of every 60 seconds. The DC to AC inverter 22 provides a power output curve closely following the output power curves of the generator 20. The inverter 22 provides a connection to the AC mains via a flying lead with accessible terminals. The unit is also self-protected against incorrect wiring e.g. transposed Live and Neutral.

The inverter 22 operates from semi-smooth DC voltage input varying from zero to 350 volts. The turbine 20 comprises a Small-Scale Wind Turbine (SSWT) generator comprising a three-phase rectified permanent magnet generator. The useful voltage range, where the inverter 22 delivers output power between zero and maximum, is determined by the turbine's power curve.

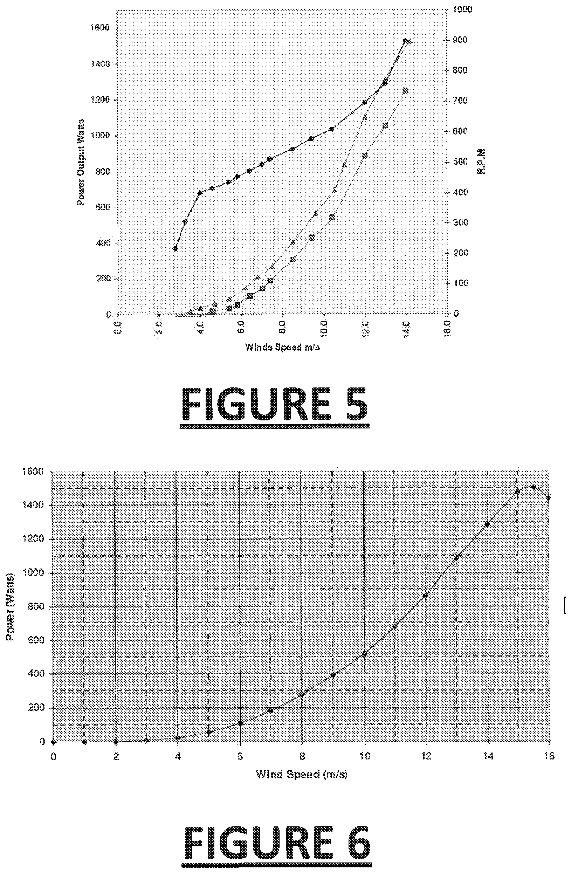

Figure 5 is a typical power curve for a SSWT with power output in Watts on the left vertical axis and rotational speed in rpm on the right vertical axis plotted against wind speed in m/s on the horizontal axis. In Figure 4, the square markers indicate the AC output of the inverter 22, the triangular markers indicate the ideal DC output of the turbine 20 as a function of wind speed in m/s. The DC output voltage of the turbine is between 100 and 350V DC. The maximum input current from the turbine 20 in normal operating conditions is approximately 10 Amps. Figure 6 is a similar graph showing the predicted power curve of a small-scale wind turbine suitable for use with the invention.

The inverter 22 constantly monitors the input voltage and/or current or electrical frequency from the renewable energy source and adjust its output power delivery according to these parameters. If the generator voltage goes above a certain threshold (the pre-set 'braking' voltage level), the control circuitry applied a braking short circuit to the generator windings. The 'braking' voltage is selected to ensure the generator does not reach an excessive speed and goes to runaway. However, the voltage and rpm will be dependent on the actual load that the inverter 22 supplies to the turbine 20. The 'braking' voltage is adjustable to a different value depending on the design characteristics of the inverter 22. The short circuit condition is applied within 10 milliseconds of detection of pre-selected maximum voltage within the range of 250 to 350 V DC. The turbine 20 is held in the brake condition until the short circuit current drops under certain threshold and afterwards for a set period of time called turbine brake dwell time. It is to allow for the generator to slow down and enter the useful range of voltage in the event of high wind. The current threshold and the dwell time is adjustable within the range of 0.25 to 1.75A and 1 to 60 sec respectively. The device used for short-circuiting the generator output is able to withstand maximum SC current of 17A at 300Vdc and continuous current of 12A until the generator slows down, i.e. kinetic energy in the shaft is dissipated.

The unit sustains a maximum rate of rise and fall of the input voltage no less than 20 V/msec.

The power control loop 68 auto-senses the input source and is non-destructive for all specified voltage levels and for incorrect wiring, e.g. reversed polarity. The output of the inverter 22 to the mains 14 is via a flying lead with accessible terminals.

In the case of a SSWT, with the generator output connected to the inverter DC input the inverter 22 keeps the generator 20 in brake condition, i.e. short circuit condition. Once mains is present, the inverter shall continue to hold the generator in brake condition for a pre-set dwell time after sensing the mains voltage.

After this dwell time, if there is sufficient voltage at the DC input to the inverter, the unit will begin to supply power to the AC mains.

In the event of a power grid failure, AC mains disturbance or a power down for maintenance, the inverter disconnects from the AC mains and, in the case of a SSWT, apply brake to the generator. The unit 22 only attempts to reconnect to the AC mains after a dwell time of more than 180sec, which delay is configurable, from the moment the AC mains voltage is brought back within the G83/1 specified limits.

The inverter 22 provides over-current protection that will automatically reset after abnormal loading has been corrected.

The unit has an internal manual pre-set of the operational AC voltage so that it can be used in different countries. Preferably, the inverter is able to auto-sense the mains 14 voltage and frequency and auto set the operational AC voltage during the initialization process (>180sec, according to G83/1). By having the auto sense function, the inverter cannot be damaged by incorrect setting.

In addition, the inverter 22 has an ON/OFF switch that prevents the inverter from generating any power to the AC mains. The switch shall be environmentally graded and easily identified. When ON/OFF switch is in the OFF position the 'brake' may preferably applied to the generator system.

A visual status indicator (e.g. bi-colour LED) is preferably provided for indicating the current state and health of the inverter. For example, a continuous green LED could indicate that the inverter is healthy, but on Standby, a flashing green LED could indicate that the inverter 22 is healthy and exporting to mains, a red LED could be used to indicate that the inverter 22 is faulty, requires attention from authorized personnel and a flashing red LED could indicate that the inverter 22 is experiencing an intermittent fault, e.g. AC out of spec, over-temperature shutdown, initialization.

A small LCD panel (not shown) is also provided to give further information on the inverter's status, error codes and display content that is software configurable.

The inverter preferably has an overall minimum efficiency of 90% with DC input voltage of at least 220V. Most preferably, the inverter has an overall minimum efficiency of 92% with DC input voltage of at least 200V. In standby, the inverter preferably has an overall standby consumption of less than 1.00W with AC mains connected and DC input voltage below the operational threshold.

From a safety perspective, the inverter 22 has an accessible chassis ground lug to securely attach ground wires and all switches and visual indicators are located on the lower section of the front panel.

To fit inside most existing street lamp posts, the inverter is no greater than 100mm wide, 110mm deep and 250mm high. In addition, the inverter is water and dust proof to at least IP33, but ideally IP55 as per BS EN 60529:1992. The inverter preferably weighs less than 6 kg and most preferably no more than 11kg. The inverter comprises suitable fixings for mounting on a sliding rail.

In addition, the inverter 22 comprises a USB connector of an environmentally sealed type.

All flying lead terminals are preferably located behind a removable panel which requires a tool to remove and preferably exit the enclosure on the bottom face. The enclosure for the inverter is constructed of light and robust material, does not support fungal growth and can ideally withstand corrosion for a minimum of 20 years.

Preferably the inverter is cooled by ambient air, although forced ambient air cooling may be acceptable in certain circumstances utilising PWM control to minimise fan RPM. Where forced air cooling is employed, the direction of the airflow should not allow water droplets from condensation to be introduced into the enclosure. Ideally the inverter has an operational temperature range of - 25°C to +55°C, or acceptably between -10°C to +40°C. The unit is preferably sealed so as to operate in 100% RH conditions of mist/fog

The inverter 22 optionally, and preferably provides remote status alert and data, most preferably in RS232 format downloadable via a powered USB connector. Status alert indicators may comprise any one or more of the group comprising: over-temperature; over-current; AC mains out of specification; DC generator brake condition; and wrong polarity of the DC voltage etc. Additionally or alternatively, the inverter may comprise a data logging circuit that logs any one or more of the following parameters: accumulated energy exported to the AC mains (in kWh); consumed energy by the inverter; current condition of the mains (e.g. voltage, frequency and AC load in percent of full load); and current condition of the generator (e.g. i.e. voltage, available power).

The inverter 22 is preferably programmable via a USB port and may provide an indication of successful programming and re-programming. It may be desirable for users to be able to program the inverter 22 to control its ON/OFF status, and/or pre-set the AC mains parameters within the specification (BS EN 50438: 2007 Requirements for the connection of micro-generators in parallel with public low-voltage distribution networks and G83/1), pre-set the DC input maximum and minimum voltage, and of defining the power curve, pre-set the AC 'mains' dwell time, pre-set the 'Short Circuit Current' threshold & dwell time, and/or pre-set the maximum power delivered.

The inverter is preferably capable of operating as a master or slave when connected in parallel with one or more units of the same or similar type.

Tilt switches may be provided that close if the inverter 22 is tilted from vertical in any direction. This feature provides a safety shut off in the event that the lamp post is struck by a vehicle and/or folded down for servicing and/or maintenance. When the tilt switches close, the inverter preferably short circuits the generator and a loss of AC supply followed by a resumption of AC supply may be required to reset this feature.

The inverter 22 preferably comprises an internal clock which may be set to GMT during manufacture. The inverter may be capable of being programmed to short-circuit the generator and/or disconnect from the mains during at least 2 periods during a 24-hour period.

## Claims

1. A power generation apparatus (10) connectable via a master electricity meter (15) to a mains power supply (14), the power generation apparatus comprising:
a power generation circuit (28) comprising: a renewable energy source of electricity (20) comprising any one or more of the group comprising: a wind turbine; a photovoltaic cell; and a water electricity turbine;
an inverter (22) adapted to convert DC to AC and to provide an AC output of a substantially constant RMS voltage and frequency for regulating the power output of the renewable energy source of electricity (20); and
a power consumption circuit (30) comprising an electrical load (34) powered directly from the mains power supply (14),
a generation meter (25) for metering the power generated by the renewable source of electricity (20);
a feed-in meter (27) for metering the power fed back to the mains power supply (14) via the master electricity meter (15); and
an electrical connection (26, 36, 42) between the inverter (22) and the power consumption circuit (30).

2. A power generation apparatus as claimed in claim 1, wherein the inverter (22) is adapted to regulate, condition, shape or modify the output of the renewable energy source of electricity.

3. A power generation apparatus as claimed in claim 1 or claim 2, wherein the electrical connection (26, 36, 42) between the power generation circuit (28) and the power consumption circuit (30) comprises an accumulator or battery (38a) for storing electricity generated by the renewable energy source of electricity (20), the battery or accumulator (38) being chargeable, in use, using electricity from the inverter (22) and further comprising a switch (40), which switch, upon detection of a loss of power at the mains power supply (14), connects the battery/accumulator (38a) to the power consumption circuit (30) via a supplementary inverter for converting stored DC voltage into AC voltage at a desired voltage, current and/or frequency, and which switch (40) disconnects it (38) upon detection of power at the mains power supply (14).

4. A power generation apparatus (10) as claimed in any of claims 1 to 3, further comprising a lamp post (32), a lamp (34), a first electrical connection (26) for transmitting electricity generated by the renewable energy source of electricity (20) to a mains power supply (14) and a second electrical connection (36) from the mains power supply (14) to the lamp (34).

5. A power generation apparatus (10) as claimed in claim 4, wherein the first (26) and second (36) electrical connections are linked.

6. A power generation apparatus (10) as claimed in any preceding claim, wherein the inverter (22) matches the output of the renewable energy source of electricity (20) to the mains power supply (14).

7. A power generation apparatus (10) as claimed in any preceding claim, wherein the inverter (22) comprises any one or more of the group comprising: a protection circuit (54); a speed controller (56); means for applying a braking voltage or load to the renewable energy source of electricity; a current shaping and isolation circuit (62); an inverse rectifier circuit (64); a shunt (66) interposed between the inverter (22) and the mains (14); and a power control loop (68).

8. A power generation apparatus (10) as claimed in claim 7, wherein the speed controller (56) is adapted to monitor the speed of the generator by reference to its voltage, current or electrical frequency output, and wherein the power control loop (68) monitors the voltage at each stage of the conversion and applies corrections to each of the isolation, inverse rectifier and shunt circuits to ensure that the outputted AC power substantially matches that of the mains power supply within acceptable limits.

9. A power generation apparatus (10) as claimed in any preceding claim, wherein the inverter (22) is adapted to sustain an output power of 1800 watts for 30 seconds out of every 60 seconds.

10. A power generation apparatus (10) as claimed in any preceding claim, wherein the inverter (22) constantly monitors the input voltage from the renewable energy source of electricity (20) and adjusts its output power delivery according to the renewable energy source of electricity's voltage (20).

11. A power generation apparatus (10) as claimed in any of claims 7 to 10, wherein the means for applying a braking voltage or load to the renewable energy source of electricity (20) comprises control circuitry adapted to apply a braking short circuit to the generator windings, and wherein the short circuit condition is applied within 10 milliseconds of detection of pre-selected maximum voltage, and wherein the short circuit condition is held until the short circuit current drops under certain threshold and thereafter for a dwell time, the current threshold and the dwell time being adjustable within the range of 0.25 to 1.75A and 1 to 60 sec, respectively.

12. A power generation apparatus (10) as claimed in any preceding claim, wherein the inverter (22) is adapted to sense the mains voltage and frequency and set the operational output AC voltage during an initialization process.

13. A power generation apparatus as claimed in any preceding claim, wherein the renewable energy source of electricity (20) comprises a small-scale wind turbine (SSWT) generator comprising a three-phase rectified permanent magnet generator.

14. A power generation apparatus (10) as claimed in any preceding claim, wherein the inverter is no greater than 100mm wide, 110mm deep and 250mm high, is at least IP33-rated and is adapted to fit inside a street lamp post.

15. A power generation apparatus (10) as claimed in any preceding claim, wherein the renewable energy source of electricity (20) is mounted on a street light, gantry or telecommunications mast.

## Patentansprüche

1. Ein Stromerzeugungs Apparat (10), der über einen Hauptstrom Zähler (15) an eine Netzstromversorgung (14) angeschlossen ist, der Stromerzeugungs Apparat aus:
ein Stromerzeugungs Kreis (28), bestehend aus einer Stromquelle für erneuerbare Energien (20), die einen oder mehrere der Gruppe umfasst: eine Windkraftanlage; eine Photovoltaik-Zelle; und eine Wasser stromturbine;
ein Wechselrichter (22), der für die Umwandlung von DC in AC angepasst ist und eine Wechsel Stromleistung von einer wesentlich Konstanten RMS-Spannung und-Frequenz zur Regulierung der Leistung der erneuerbaren Energiequelle (20) liefert; Und
eine Stromverbrauchs Schaltung (30) mit elektrischer Belastung (34) direkt aus der Stromversorgung angetrieben (14.),
ein Erzeugungs Messer (25) zur Dosierung des Stroms, der durch die erneuerbare Stromquelle erzeugt wird (20);
ein Einspeise Zähler (27) zur Dosierung des Stroms, der über den Stromzähler (14) an die Stromversorgung zurückgeführt wird (15); Und
eine elektrische Verbindung (26, 36, 42) zwischen den Reverse (22) und der Stromverbrauchs Kreis (30).

2. Ein Stromerzeugungs Apparat, wie in Anspruch 1 beansprucht, wobei der Wechselrichter 22 ist angepasst, um die Produktion der erneuerbaren Energiequelle der Elektrizität zu regulieren, zu konditionieren, zu gestalten oder zu verändern.

3. Ein Stromerzeugungs Apparat, wie in Anspruch 1 oder Anspruch 2 beansprucht, wobei der elektrische Anschluss (26, 36, 42) zwischen dem Stromerzeugungs Kreis (28) und dem Stromverbrauch (30) besteht ein Akkumulator oder eine Batterie (38a) für die Speicherung von Strom, der durch die erneuerbare Energiequelle der Elektrizität (20) erzeugt wird, wird die Batterie oder der Akkumulator (38) kostenpflichtig, im Einsatz, mit Strom aus dem Wechselrichter (22) und weiter bestehend aus einem Schalter (40), die wechseln, nach der Erkennung eines Verlustes von Leistung an der Stromversorgung (14), verbindet den Akku/Akkumulator (38a) auf den Stromverbrauchs Kreis (30) über einen zusätzlichen Wechselrichter zur Umwandlung der gespeicherten GLEICHspannung in WECHSELspannung bei einer gewünschten Spannung, Strömung und/oder Frequenz, und welche Schalter (40) trennt Sie (38) bei der Erkennung der Leistung an der Stromversorgung (14).

4. Ein Stromerzeugungs Apparat (10), wie er in den Ansprüchen 1 bis 3 beansprucht wird, bestehend aus einem Lampenpfosten (32), einer Lampe (34), einer ersten elektrischen Verbindung (26) zur Übertragung von Strom, der von der erneuerbaren Energiequelle (20) erzeugt wird, auf eine Stromversorgung (14) und eine zweite elektrische Verbindung (36) von der Stromversorgung (14) bis zur Lampe (34).

5. Ein Stromerzeugungs Apparat (10), wie in Anspruch 4 beansprucht, wobei die ersten (26) und zweiten (36) elektrischen Verbindungen miteinander verbunden sind.

6. Ein Stromerzeugungs Apparat (10), wie er in jedem vorhergehenden Anspruch beansprucht wird, wobei der Wechselrichter (22) der Leistung der erneuerbaren Energiequelle (20) an die Stromversorgung (14) entspricht.

7. Ein Stromerzeugungs Apparat (10), wie er in jedem vorhergehenden Anspruch beansprucht wird, wobei der Wechselrichter 22 umfasst eine oder mehrere der Gruppe, bestehend aus einem Schutzkreis (54); ein Geschwindigkeitsregler (56); Mittel zur Anwendung einer Brems Spannung oder Last auf die Stromquelle erneuerbarer Energien; ein aktueller Form-und Isolations Kreis (62); ein umgekehrter Gleichrichter Kreis (64); ein Shunt (66) zwischen dem Wechselrichter 22 und das Netz 14; und eine Power Control Loop (68).

8. Ein Stromerzeugungs Apparat (10), wie in Anspruch 7 beansprucht, wobei der Geschwindigkeitsregler (56) wird angepasst, um die Geschwindigkeit des Generators durch die Bezugnahme auf seine Spannung, Strom-oder elektrische Frequenz Leistung zu überwachen, und wobei die Power Control Loop (68) überwacht die Spannung in jeder Phase der Konvertierung und wendet Korrekturen an jedem der Isolier-, umgekehrten Gleichrichter und Shunt-Schaltungen an, um sicherzustellen, dass die ausgeputzte WECHSELstromleistung wesentlich der der Netzstromversorgung innerhalb akzeptabler Grenzen entspricht.

9. Ein Stromerzeugungs Apparat (10), wie er in jedem vorhergehenden Anspruch beansprucht wird, wobei der Wechselrichter 22 wird angepasst, um eine Leistung von 1800 Watt für 30 Sekunden aus allen 60 Sekunden zu erhalten.

10. Ein Stromerzeugungs Apparat (10), wie er in jedem vorhergehenden Anspruch beansprucht wird, wobei der Wechselrichter (22) die Eingangsspannung aus der erneuerbaren Energiequelle (20) ständig überwacht und seine Ausgangsleistung entsprechend der erneuerbaren Energiequelle anpasst. der Strom Spannung (20).

11. Ein Stromerzeugungs Apparat (10), wie er in den Ansprüchen 7 bis 10 beansprucht wird, wobei die Mittel für die Anwendung einer Brems Spannung oder-Belastung auf die erneuerbare Energiequelle der Elektrizität (20) die Steuerschaltung beinhaltet, die für die Anwendung eines Brems kurzkreises auf den Generator angepasst ist. Wicklungen, und wobei der Kurzschluss Zustand innerhalb von 10 Millisekunden nach Erkennung der vorausgewählten maximal Spannung aufgetragen wird und wobei der Kurzschluss Zustand so lange gehalten wird, bis der Kurzschlussstrom unter eine bestimmte Schwelle fällt und danach eine Verweilzeit, die aktuelle Schwelle und die Verweildauer im Bereich von 0,25 bis 1,75 A bzw. 1 bis 60 sec einstellbar.

12. Ein Stromerzeugungs Apparat (10), wie er in jedem vorhergehenden Anspruch beansprucht wird, wobei der Wechselrichter (22) angepasst ist, um die Netzspannung und-Frequenz zu spüren und die Betriebsleistung der WECHSELspannung während eines Initialisierungs Prozesses zu setzen.

13. Ein Stromerzeugungs Apparat, wie er in jedem vorhergehenden Anspruch beansprucht wird, wobei die erneuerbare Energiequelle (20) eine kleinteilige Wind Turbine (SSWT) Generator, bestehend aus einem dreistufigen, korrigierten Dauermagnet Generator.

14. Ein Stromerzeugungs Apparat (10), wie er in jedem vorhergehenden Anspruch beansprucht wird, wobei der Wechselrichter nicht größer als 100mm breit, 110mm tief und 250mm hoch ist, ist mindestens IP33-bewertet und wird an einen Straßenlampen Pfosten angepasst.

15. Ein Stromerzeugungs Apparat (10), wie in jedem vorhergehenden Anspruch behauptet, in dem die erneuerbare Energiequelle der Elektrizität (20) auf einem Straßenlicht, Portal oder Telekommunikations Mast montiert ist.

## Revendications

1. Un appareil de production d'énergie (10) raccordé via un compteur électrique principal (15) à une alimentation secteur (14), l'appareil de production d'énergie comprenant:
un circuit de production d'électricité (28) comprenant: une source d'énergie renouvelable (20) comprenant un ou plusieurs des groupes comprenant: une éolienne; une cellule photovoltaïque; et une turbine d'électricité d'eau;
un onduleur (22) adapté pour convertir le courant continu en courant alternatif et fournir une sortie C.A. d'une tension et d'une fréquence RMS sensiblement constantes pour réguler la puissance de sortie de la source d'énergie renouvelable (20); Et
circuit de consommation d'énergie (30) comprenant une charge électrique (34) alimenté directement à partir de l'alimentation secteur (14),
un compteur de génération (25) pour mesurer la puissance générée par la source d'électricité renouvelable (20);
un compteur d'alimentation (27) pour la mesure de la puissance alimentée à l'alimentation secteur (14) via le compteur électrique principal (15); Et
une connexion électrique (26, 36, 42) entre le Inverse (22) et le circuit de consommation d'énergie (30).

2. Un appareil de production d'énergie tel que revendiqué dans la revendication 1, dans lequel l'onduleur 22 est adapté pour réguler, conditionner, façonner ou modifier la production de la source d'énergie renouvelable de l'électricité.

3. Un appareil de production d'énergie comme le prétend la revendication 1 ou la revendication 2, dans lequel le raccordement électrique (26, 36, 42) entre le circuit de production d'énergie (28) et le circuit de consommation (30) comprend un accumulateur ou une batterie (38a) pour le stockage de l'électricité produite par la source d'énergie renouvelable (20), la batterie ou l'accumulateur (38) étant facturable, utilisé, utilisant l'électricité de l'onduleur (22) et comprenant un interrupteur (40), qui commute, après détection d'une perte de alimentation électrique au secteur (14), raccorde la batterie/accumulateur (38a) au circuit de consommation électrique (30) via un onduleur supplémentaire pour la conversion de la tension continue mémorisée en tension C.A. à une tension, à un courant et/ou à une fréquence, et qui commute (40) le déconnecte (38) au moment de la détection de l'alimentation électrique au secteur (14).

4. Un appareil de production d'électricité (10) tel que réclamé dans l'une des revendications 1 à 3, comprenant en outre un lampadaire (32), un feu (34), une première connexion électrique (26) pour transmettre de l'électricité produite par la source d'énergie renouvelable (20) à une alimentation secteur (14) et un deuxième branchement électrique (36) de l'alimentation secteur (14) à la lampe (34).

5. Un appareil de production d'électricité (10), comme le prétend la revendication 4, dans lequel les premières (26) et deuxième (36) connexions électriques sont liées.

6. Un appareil de production d'énergie (10) tel que réclamé dans toute revendication précédente, dans lequel l'onduleur (22) correspond à la sortie de la source d'électricité renouvelable (20) à l'alimentation secteur (14).

7. Un appareil de production d'énergie (10) tel que réclamé dans toute revendication précédente, dans laquelle l'onduleur 22 comprend un ou plusieurs des groupes comprenant: a un circuit de protection (54); un régulateur de vitesse (56); moyens d'application d'une tension de freinage ou d'une charge à la source d'énergie renouvelable d'électricité; un circuit d'isolation et de façonnage de courant (62); un circuit de redresseur inverse (64); un shunt (66) interposé entre l'onduleur 22 et le secteur 14; et une boucle de contrôle de puissance (68).

8. Un appareil de production d'énergie (10) comme le prétend la revendication 7, dans lequel le régulateur de vitesse (56) est adapté pour surveiller la vitesse du générateur par référence à sa tension, courant ou sortie de fréquence électrique, et où la boucle de commande de puissance (68) surveille la tension à chaque étape de la conversion et applique des corrections à chacun des circuits d'isolation, de redresseur inverse et de shunt pour s'assurer que l'alimentation C.A. de sortie correspond sensiblement à celle de l'alimentation secteur dans des limites acceptables.

9. Un appareil de production d'énergie (10) tel que réclamé dans toute revendication précédente, dans laquelle l'onduleur 22 est adapté pour maintenir une puissance de sortie de 1800 watts pendant 30 secondes sur toutes les 60 secondes.

10. Un appareil de production d'énergie (10) tel que réclamé dans toute revendication précédente, dans laquelle l'onduleur (22) surveille constamment la tension d'entrée de la source d'électricité renouvelable (20) et ajuste sa puissance de sortie en fonction de la source d'énergie renouvelable de tension de l'électricité (20).

11. Un appareil de production d'électricité (10), tel que réclamé dans l'une des revendications 7 à 10, dans lequel les moyens d'appliquer une tension de freinage ou une charge à la source d'énergie renouvelable (20) comprennent des circuits de commande adaptés pour appliquer un court-circuit de freinage au générateur enroulements, et où la condition de court-circuit est appliquée dans les 10 millisecondes de détection de la tension maximale présélectionnée, et où la condition de court-circuit est maintenue jusqu'à ce que le courant de court-circuit tombe sous certain seuil et par la suite pour un temps de résidence, le seuil actuel et le temps de séjour étant réglables dans la fourchette de 0,25 à 1,75 A et de 1 à 60 sec, respectivement.

12. Un appareil de production d'énergie (10), tel que réclamé dans toute revendication précédente, dans lequel l'onduleur (22) est adapté pour détecter la tension et la fréquence du réseau et régler la tension C.A. de sortie opérationnelle pendant un processus d'initialisation.

13. Un appareil de production d'électricité tel que réclamé dans toute revendication précédente, où la source d'énergie renouvelable (20) comprend une petite échelle générateur d'éoliennes (SSWT) comprenant un générateur à aimant permanent rectifié triphasé.

14. Un appareil de production d'énergie (10) tel que réclamé dans toute revendication précédente, où l'onduleur n'est pas supérieur à 100mm de large, 110mm de profondeur et 250mm de haut, est au moins IP33 et est adapté pour s'adapter à l'intérieur d'un lampadaire.

15. Un appareil de production d'électricité (10), tel que réclamé dans toute revendication précédente, où la source d'énergie renouvelable (20) est montée sur un mât de lumière, de portique ou de télécommunication.
